# DEMANDE DE BREVET EUROPEEN

(11) **EP 2 178 034 A1**
(43) Date de publication de la demande: **21.04.2010**
(21) Numéro de dépôt: 09172350.2
(22) Date de dépôt: 06.10.2009
(51) Int. Cl.: G06Q 10/00

(54) **Procédé de gestion d'une collectivité de producteurs de déchets**

(30) Priorité: 08.10.2008 FR 0856825
(71) Demandeur: COMPAGNIE PLASTIC OMNIUM, 69007 Lyon (FR)
(72) Inventeur: Boire, Etienne, 78420 Carrières sur Seine (FR); Anfossi, Patrick, 92250 La Garenne Colombes (FR); Chiron, Patrick, 92190 Meudon (FR); Benvenuti, Armelle, 83820 Rayol-Canadel (FR)
(74) Mandataire: Potdevin, Emmanuel Eric

(57) **Abrégé**

L'invention a pour objet un procédé de gestion d'une collectivité de producteurs de déchets, comportant les étapes suivantes :
- on recueille des données relatives à la gestion de déchets dans la collectivité par l'intermédiaire d'au moins un outil de recueil (36-40), l'un des outils (36) étant un outil de surveillance d'un centre d'appel répertoriant des demandes de producteurs de déchets,
- on stocke ces données dans une base de données (16),
- on détermine au moins une valeur d'au moins un paramètre relatif à la collectivité à partir des données recueillies et d'autres données stockées dans la base de données (16).

## Description

La présente invention concerne la gestion d'une collectivité de producteurs de déchets.

On connaît dans l'état de la technique un procédé de gestion d'un parc de conteneurs à déchets, ces conteneurs étant mis à disposition des producteurs de déchets d'une collectivité. Dans le cadre de ce procédé, on rassemble des données concernant les conteneurs dans une base de données. Le rassemblement de ces données permet ensuite une analyse de celles-ci par exemple par les employés de la collectivité, notamment en vue d'optimiser la collecte de déchets (par exemple, en modifiant le circuit ou les horaires de collecte).

Toutefois, un tel procédé n'offre pas à la collectivité locale en charge des producteurs une vision d'ensemble de la nature des producteurs, de leurs habitudes et de leurs besoins.

L'invention permet d'améliorer la connaissance par la collectivité locale des producteurs de déchets, et de leurs comportements relatifs à la collecte et au tri des déchets, de façon à mieux cibler les actions à mener par celle-ci.

A cet effet, l'invention a pour objet un procédé de gestion d'une collectivité de producteurs de déchets, comportant les étapes suivantes :
- on recueille des données relatives à la gestion de déchets dans la collectivité au moyen d'au moins un outil de recueil, l'outil ou l'un des outils étant un outil de surveillance d'un centre d'appel répertoriant des demandes de producteurs de déchets,
- on stocke les données dans une base de données,
- on détermine au moins une valeur d'au moins un paramètre relatif à la collectivité à partir des données recueillies et d'autres données stockées dans la base de données.

Ainsi, les demandes des producteurs de déchets sont mieux identifiées par la collectivité, les paramètres relatifs à la collecte obtenus grâce au procédé selon l'invention fournissant à celle-ci des indicateurs concernant le comportement des producteurs vis-à-vis de la collecte ou du tri des déchets.

Les informations que la collectivité retire de ce procédé ne concernent en effet plus seulement des informations objectives relatives au parc de bacs mais sont complétées avec des informations provenant des données fournies par les producteurs eux-mêmes, ce qui permet de mieux comprendre leur comportement.

Les collectivités peuvent de ce fait prendre des mesures plus adaptées et mieux ciblées pour atteindre les objectifs qu'elles se sont fixées. Ces mesures peuvent consister par exemple à mener une campagne de sensibilisation au tri des déchets dans certains quartiers ou auprès de certains corps de métier.

En outre, la détermination des valeurs de paramètres relatifs à la collectivité facilite la détection de problèmes dans la gestion de déchets et la prise de décision de la collectivité en lui fournissant des indicateurs simples à exploiter.

Le procédé selon l'invention peut également comprendre l'une ou l'autre des caractéristiques de la liste suivante :
- les outils de recueil sont au nombre de deux, l'un deux au moins faisant partie de la liste d'outils suivante, aptes à coopérer directement avec les conteneurs :
   o un outil de saisie de données, utilisé par exemple pour saisir les résultats d'une enquête effectuée auprès d'un producteur ou créer une identité de producteur,
   o un outil de surveillance de collecte de conteneurs de déchets mis à disposition des producteurs,
   o un outil de surveillance de collecte de déchets au niveau d'un point d'apport volontaire de déchets,
   o un outil de vérification du contenu des conteneurs, notamment d'une appartenance du contenu à au moins un type prédéterminé de déchets, permettant de vérifier la qualité du tri effectué par un producteur,
   o un outil d'aide à la maintenance des conteneurs.

Ainsi, la collectivité peut avoir à disposition des informations qui concernent de nombreux aspects liés aux déchets, comme le déroulement de la collecte, l'état général des conteneurs ou le tri des déchets. Ces informations peuvent être confrontées les unes aux autres à l'aide des paramètres, ce qui permet une gestion globale de la collectivité,
- le procédé comprend une étape lors de laquelle on centralise les données provenant des outils de recueil dans une base de données. Les données peuvent de ce fait être traitées plus facilement. En outre, elles peuvent être plus facilement conservées, ce qui permet d'utiliser ces données a posteriori pour fournir à l'utilisateur des statistiques rétroactives relatives à la gestion de la collectivité, notamment des déchets. On facilite ainsi le suivi de l'évolution des performances de la collectivité, l'analyse de cette évolution permettant de prendre les mesures qui s'imposent pour améliorer ces performances ,
- les outils de recueil sont au moins au nombre de deux et on détermine au moins une valeur d'au moins un paramètre à partir des données recueillies par l'un des outils et des données recueillies par un autre des outils. Les paramètres ne sont donc pas forcément des statistiques obtenues à partir de données recueillies par un outil de recueil et de données statiques relatives au producteur (telles que le type de producteur ou le nombre de personnes dans son foyer). Les paramètres pourraient par exemple comprendre un nombre de demandes effectuées au centre d'appel par catégorie socioprofessionnelle des producteurs. Toutefois, comme l'invention permet également de mettre en place des paramètres issus du traitement d'une donnée recueillie par un outil à l'aide d'une autre donnée recueillie par un autre outil, elle permet de suivre l'évolution de la collectivité en temps réel et de réagir en conséquence. Un exemple d'un tel paramètre est le nombre de demandes effectuées par des producteurs de bacs non collectés lors d'une collecte donnée. Il est également possible de déterminer au moins une valeur d'au moins un paramètre à partir des données recueillies par l'un des outils et d'autres données, dites statiques, stockées dans la base,
- le procédé comprend une étape lors de laquelle on sélectionne des critères de traitement du paramètre, et on communique, notamment sous forme de graphique et/ou de carte géographique et/ou de tableau, ce paramètre traité en fonction des critères sélectionnés. Ainsi, la collectivité peut choisir la forme de communication des paramètres. Elle peut par exemple choisir de visualiser les valeurs d'un paramètre recueilli sur plusieurs années, si elle veut faire un état des lieux de la situation d'un élément relatif à la gestion des déchets, ou sur quelques mois, pour vérifier l'impact d'une mesure récente. Ainsi, le procédé permet de visualiser des paramètres sous plusieurs formes selon les besoins de la collectivité. La collectivité peut ainsi plus facilement obtenir et visualiser les informations dont elle a besoin pour prendre les mesures qui s'imposent,
- le procédé peut comporter une étape lors de laquelle on enregistre les critères sélectionnés. De cette façon, si la collectivité consulte souvent des paramètres sous une certaine forme préférentielle, elle peut enregistrer la forme et le périmètre de ces paramètres en tant que « favoris » et comparer facilement les paramètres obtenus avec ces mêmes paramètres, obtenus lors d'une autre période temporelle ou pour une autre zone géographique, etc. Cette fonctionnalité permet de simplifier la communication des paramètres en répondant exactement aux besoins de la collectivité et d'éviter les erreurs dans la saisie de critères de traitement qui pourraient amener à une restitution erronée. Dans ce cas, le procédé comprend optionnellement une étape lors de laquelle on déclenche la communication des paramètres en fonction de critères enregistrés par une activation d'un lien. Ainsi, la collectivité peut rapidement obtenir les paramètres préférentiels dont elle a besoin,
- les critères de traitement comprennent au moins un critère appartenant à la liste suivante :
   o une période temporelle,
   o une zone géographique,
   o un type de conteneur,
   o un type de producteur,
   o un flux de déchets,
   o un type d'unité de représentation,
   o une échelle d'unité de représentation,
   o une forme de présentation.
- le procédé peut comprendre une étape lors de laquelle on définit une valeur d'objectif pour au moins un paramètre, et on communique la valeur d'objectif lors de la communication du paramètre. Ainsi, la collectivité peut plus facilement effectuer un suivi de la gestion des déchets pour visualiser l'impact des mesures appliquées sur l'évolution des paramètres et déterminer si les objectifs ont été remplis, ou s'il est nécessaire de renforcer les mesures déjà prises,
- le procédé comprend une étape lors de laquelle on associe au moins une donnée relative à une entité de la collectivité à une position de l'entité sur une carte géographique, et on représente la donnée sur la carte, en liaison avec la position de l'entité. Une entité de la collectivité peut par exemple être un producteur ou un conteneur. Cette fonctionnalité permet une meilleure visualisation de la situation de la collectivité par les employés de la collectivité, qui engendre une analyse plus pertinente en un temps réduit et une meilleure réponse aux besoins des producteurs. Par exemple, on peut représenter sur une carte tous les commerçants pour vérifier dans quels secteurs on doit fournir des conteneurs de collecte ou identifier les quartiers dans lesquels il existe le plus de mécontents et donc pour lesquels le service doit être amélioré,
- les paramètres sont relatifs à l'un ou plusieurs des éléments de la liste suivante :
   o une caractéristique d'au moins un producteur de déchets,
   o une caractéristique d'au moins un conteneur de déchets,
   o un type de déchets collectés,
   o une demande d'au moins un producteur de déchets.
- le procédé comporte une étape lors de laquelle, la base de données étant stockée sur un serveur, on extrait de la base de données au moins une partie des données, et on intègre ces données à un terminal distinct du serveur. Sur le terrain, les opérateurs liés à la gestion des déchets peuvent donc accéder aux informations utiles relatives aux producteurs ou aux conteneurs sur lesquels ils doivent agir, par exemple en cas d'opération de maintenance d'un conteneur ou de vérification du tri,
- optionnellement, on modifie les données stockées sur le terminal, qui forme alors un outil de recueil, et on met à jour la base de données en remplaçant les données correspondantes de la base de données par les données du terminal. Ainsi, la mise à jour de la base de données est effectuée facilement. Le recueil des données est donc simplifié et la saisie des données dans la base centrale est quasiment effectuée en temps réel.

L'invention a également pour objet un procédé de recueil de données relatives à une collectivité de producteur de déchets, dans lequel :
- on recueille des données relatives à la gestion de déchets dans la collectivité au moyen d'au moins un outil de recueil, l'outil ou l'un des outils étant un outil de surveillance d'un centre d'appel répertoriant des demandes de producteurs de déchets,
- on stocke les données dans une base de données.

L'invention a également pour objet un procédé de traitement de données relatives à une collectivité de producteurs de déchets, dans lequel, des données relatives à la gestion de déchets dans la collectivité étant stockée dans une base de données, ces données comportant des données relatives à des demandes de producteurs de déchets recueillies auprès d'un centre d'appel, on détermine au moins une valeur d'au moins un paramètre relatif à la collectivité à partir des données recueillies et d'autres données stockées dans la base de données .

L'invention a également pour objet un système de gestion d'une collectivité de producteurs de déchets, comprenant:
- au moins un outil de recueil de données relatives à la gestion de déchets dans la collectivité, l'outil ou l'un des outils étant un outil de surveillance d'un centre d'appel répertoriant des demandes de producteurs de déchets,
- des moyens de stockage d'une base de données comportant les données recueillies, et
- des moyens de détermination d'au moins une valeur d'au moins un paramètre relatif à la collectivité à partir des données recueillies et d'autres données stockées dans la base de données.

Un tel système permet de mettre en oeuvre le procédé de gestion selon l'invention.

L'invention a également pour objet un dispositif de traitement de données relatives à une collectivité de producteurs de déchets, comprenant :
- des moyens de stockage d'une base de données comportant des données relatives à la gestion de déchets dans la collectivité, ces données comprenant des données relatives à des demandes de producteurs de déchets recueillies auprès d'un centre d'appel, et
- des moyens de détermination d'au moins une valeur d'au moins un paramètre relatif à la collectivité à partir des données recueillies et d'autres données stockées dans la base de données.

Ce dispositif permet de mettre en oeuvre le procédé de traitement de données selon l'invention.

L'invention a également pour objet un programme d'ordinateur, mettant en oeuvre l'un ou l'autre des procédés selon l'invention. Elle a également pour objet un support de données comprenant des moyens de stockage d'un programme d'ordinateur selon l'invention et une mise à disposition d'un programme d'ordinateur selon l'invention.

L'invention concerne également un procédé de gestion d'une collectivité de producteurs de déchets dans lequel on communique, à partir d'une base de données comprenant des données relatives à la gestion d'une collectivité de producteurs de déchets, des paramètres relatifs à ces données en fonction de critères de traitement sélectionnés par l'utilisateur i.e. un employé de la collectivité, par exemple. Ces critères sont également enregistrés. De cette façon, on peut communiquer à l'utilisateur ses données favorites, toujours sous la même forme.

L'invention concerne également un procédé de gestion d'une collectivité locale dans lequel on associe à au moins une donnée relative à une entité d'une collectivité de producteurs de déchets, une position de l'entité sur une carte géographique et on représente cette donnée sur la carte, en lien avec la position de l'entité. Une entité de la collectivité peut par exemple être un producteur ou un conteneur. Un tel procédé permet de mieux visualiser la situation de la collectivité.

Toutes les caractéristiques présentées plus haut sont également des caractéristiques optionnelles de ces deux procédés.

L'invention sera mieux comprise à la lecture de la description qui va suivre, donnée uniquement à titre d'exemple et faite en se référant aux dessins dans lesquels :
- la figure 1 représente un système de gestion d'une collectivité de producteurs de déchets selon un mode de réalisation de l'invention,
- la figure 2 est un diagramme d'un procédé de recueil de données selon un mode de réalisation de l'invention, effectué à l'aide du système de la figure 1,
- la figure 3 est un diagramme d'un procédé de restitution d'informations à la collectivité selon un mode de réalisation de l'invention, effectué à l'aide du système de la figure 1,
- la figure 4 à 6 sont des représentations d'interfaces d'un terminal du système de la figure 1 avec un utilisateur.

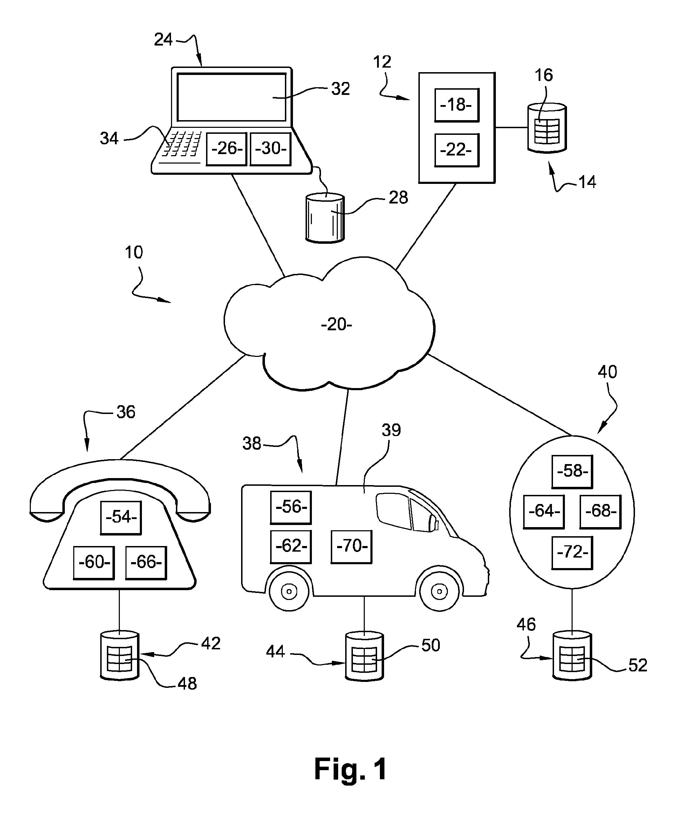

On a représenté sur la figure 1 un système 10 de gestion d'une collectivité de producteurs de déchets selon un mode de réalisation de l'invention. Ce système 10 comprend un serveur central 12 comportant des moyens de stockage 14 de données, stockant en particulier une base de données 16, ainsi qu'au moins un programme d'ordinateur classique permettant d'effectuer des opérations sur la base de données. Le serveur comprend également des moyens de calcul 18 permettant d'exécuter les programmes d'ordinateur stockés dans les moyens 14. Les moyens de stockage 14 sont classiques. Ils comprennent généralement une mémoire, telle qu'une mémoire volatile, par exemple de type EEPROM. Les moyens de calcul 18 sont également classiques et comprennent un processeur.

Le serveur 12 est relié à un réseau de télécommunications 20, par exemple le réseau Internet, par l'intermédiaire de moyens d'émission et réception de données 22 classiques, tels qu'un modem. Il peut donc envoyer des données par l'intermédiaire du réseau 20 à d'autres éléments du réseau. Ces échanges de données avec d'autres éléments du réseau sont effectués de façon classique, à l'aide notamment d'un programme d'ordinateur, tel qu'un navigateur Internet, stocké dans les moyens de stockage 14.

Le système 10 comprend également au moins un terminal 24 d'accès à des informations relatives à la gestion de la collectivité, formant terminal d'interface avec un utilisateur, généralement un employé de la collectivité. Ce terminal 24 est un ordinateur de bureau. Il est relié au réseau 20 par l'intermédiaire de moyens 26 classiques d'émission-réception, et, de ce fait, au serveur 12. En outre, il comprend des moyens de stockage 28 d'au moins un programme d'ordinateur, tel qu'un navigateur Internet, des moyens de calcul classiques 30, permettant l'exécution des programmes d'ordinateur stockés dans les moyens de stockage 28. Il comprend également des moyens d'interface avec l'utilisateur comprenant des moyens de restitution d'informations, tels que des moyens d'affichage 32, par exemple un écran et des moyens de réception d'informations, tels que des moyens de saisie 34, comme par exemple un clavier ou une souris.

Le système comprend également au moins trois terminaux 36 à 40, formant outils de recueil de données. Ces outils sont utilisés par des professionnels du domaine de la gestion des déchets. Le premier outil de recueil 36 est par exemple un outil de surveillance d'un centre d'appel répertoriant les demandes des producteurs de déchets de la collectivité et comprend un ordinateur de bureau. Le deuxième outil 38 est un outil de surveillance de collecte de conteneurs à déchets mis à disposition des producteurs et est placé sur un camion 39 de collecte de déchets. Le troisième outil 40 est un terminal mobile, par exemple un PDA, mis à disposition d'un opérateur de gestion de déchets. Selon la tâche affectée à cet opérateur, l'outil 40 peut être un outil de vérification du contenu des conteneurs à déchets permettant de vérifier la qualité du tri effectué par les producteurs ou un outil d'aide à la maintenance de tels conteneurs. Les outils 38 et 40 sont aptes à coopérer directement avec le conteneur de collecte.

Les outils 36 à 40 comprennent des moyens de stockage de données, respectivement 42, 44 et 46, comportant une mémoire et permettant de stocker une base de données, respectivement 48, 50 et 52, certaines de ces bases de données, par exemple la base de données 46, correspondant à au moins un extrait de la base de données 16 stockée dans le serveur central. Ils comprennent également des moyens classiques, sans fil ou filaire, respectivement 54, 56 et 58, d'émission-réception de données par l'intermédiaire du réseau 20, de sorte qu'ils peuvent communiquer au moins avec le serveur central 12. Ils comprennent également des moyens classiques de calcul, respectivement 60 , 62 et 64, pour exécuter des programmes d'ordinateur stockés dans les moyens de stockage correspondants.

L'outil 36 comprend également des moyens d'interface avec l'opérateur, tel que des moyens de saisie 66, par exemple un clavier, permettant à l'opérateur recevant une demande d'un producteur de déchets de répertorier celle-ci dans la base de données 48. L'outil 40 comprend également des moyens de saisie, référencés 68.

L'outil 38 comprend des moyens de lecture d'une référence d'un conteneur de collecte, tel qu'un moyen 70 de lecture d'une puce mise en place sur un conteneur de collecte. L'outil 40 comprend également de tels moyens, référencés 72. Dans le cas de l'outil 38, la lecture s'effectue lorsque le conteneur est soulevé par un dispositif situé à l'arrière du camion de collecte 39 de façon à être vidé.

Le système selon l'invention n'est pas limité au système 10 représenté ci-dessus. Les outils de recueil peuvent par exemple ne pas être connectés au serveur 12 par l'intermédiaire d'un réseau 20 mais peuvent se connecter à celui-ci en tant que périphérique. En outre, le serveur 12 peut être connecté à deux réseaux distincts, le terminal d'accès 24 n'étant pas connecté au serveur 12 par le même réseau que les outils de recueil 36-40. Le terminal d'accès 24 peut également être confondu avec le serveur.

Le terminal 24 peut également constituer un outil de recueil de données, plus particulièrement un outil de saisie dans lequel l'utilisateur saisit manuellement des données, ces données étant par exemple des données nécessaires à la création d'une identité d'un producteur.

Le système peut également comprendre d'autres types d'outils de recueil tels qu'un outil de surveillance de la collecte effectuée au niveau d'un point d'apport volontaire. Un tel outil de collecte pourrait par exemple comprendre des moyens de lecture d'une carte à puce présentée par un producteur de déchets qui souhaiterait déposer ses déchets dans le conteneur situé au point d'apport volontaire. Il permettrait par exemple de lire un numéro d'identifiant associé à un producteur de déchets se rendant au point d'apport volontaire, stocké dans la puce électronique de la carte associée à ce producteur.

Le système peut également comprendre plusieurs terminaux d'accès semblables au terminal 24 et un nombre d'outils de collecte différent de ce qui a été décrit ci-dessus.

De même, le serveur 12, le terminal 24 ou les différents outils 36-40 peuvent comprendre des moyens supplémentaires de ceux déjà décrits, ainsi que des programmes d'ordinateur supplémentaires relativement à ceux décrits. L'outil 38 peut par exemple comprendre des moyens d'interface avec un opérateur, permettant à ce dernier de saisir des données dans la base de données 50 correspondante.

Les moyens décrits des différents éléments du système ne sont pas non plus limités à ceux décrits. Par exemple, les moyens de lecture d'une référence d'un conteneur peuvent être des moyens de lecture d'un code-barre. La nature des différents outils ou terminaux (PDA, ordinateur, etc.) n'est pas non plus limitée à ce qui a été décrit ci-dessus. De plus, les différents moyens d'un élément ne sont pas forcément compris dans un élément d'un seul tenant.

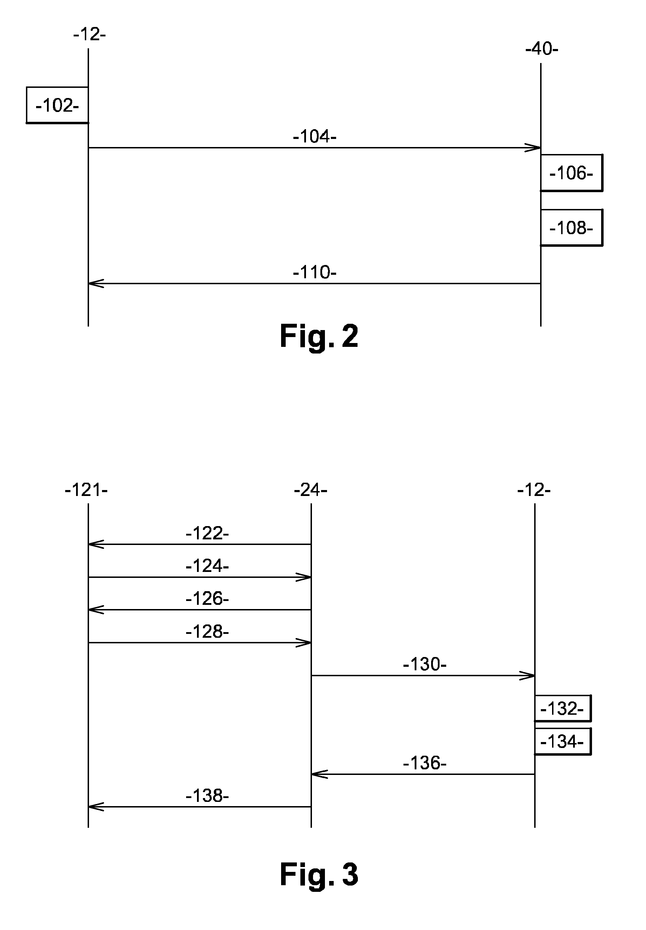

On va maintenant décrire, en référence à la figure 2, un procédé de gestion de la collectivité selon l'invention, mis en oeuvre à l'aide d'un système selon l'invention.

Le procédé permet de mettre à disposition d'employés de la collectivité des informations concernant les producteurs de déchets et leurs habitudes. Pour cela, il comprend tout d'abord un procédé de recueil de données, décrit ci-dessous.

Le procédé de recueil de données 100 est mis en oeuvre pour recueillir des données lorsque des opérations concernant la gestion des déchets dans la collectivité sont à effectuer, par exemple lorsqu'un centre d'appel relatif à la gestion des déchets reçoit une demande d'un producteur, ou bien lors de la collecte des déchets ou encore lorsqu'un opérateur intervient sur un conteneur de collecte de déchets mis à disposition d'un producteur pour sa maintenance ou vérifier la pertinence de son contenu. Il implique le serveur central 12 et au moins un des outils de recueil de données 36, 38, 40. Dans le cas présent, on décrit le procédé lorsqu'il est mis en oeuvre entre le serveur central 12 et l'outil 40.

Dans une première étape 102 du procédé 100, on extrait des données de la base de données centrale 16, par exemple les données ayant trait aux caractéristiques des conteneurs de collecte d'une zone géographique considérée. L'opérateur utilisant le terminal mobile doit par exemple dans ce cas s'occuper de la maintenance des conteneurs de ladite zone. Cette étape d'extraction est effectuée au niveau du serveur 12, à l'aide d'un programme d'ordinateur stocké dans les moyens de stockage 14 de celui-ci et des moyens de calcul 18 de celui-ci.

Le procédé 100 comprend ensuite une étape 104 lors de laquelle on télécharge sur le terminal mobile 40 la partie de la base de données extraite du serveur central 12, à l'aide des moyens d'émission-réception 22, 58 du serveur 12 et de l'outil 40 et par l'intermédiaire du réseau 20. Cette partie de la base de données est alors intégrée à l'outil 40, notamment sous la forme de la base de données 52.

L'outil ainsi préparé est amené sur le terrain. A chaque fois que l'opérateur intervient sur un conteneur de collecte, il effectue une étape 106 de lecture de l'identifiant de ce conteneur, stocké dans la puce de celui-ci, à l'aide des moyens 72 de l'outil 40. Le conteneur de collecte traité ou observé est alors reconnu dans la base de données 52. L'opérateur peut ensuite, lors d'une étape 108, saisir des données dans la base de données 52, à l'aide des moyens de saisie 68 de l'outil 40, pour indiquer qu'il est intervenu sur un conteneur particulier et/ou pour noter des anomalies concernant un conteneur de collecte particulier.

Lorsque l'opérateur a fini sa tournée et lors d'une étape 110, il transfère les données recueillies de l'outil 40 vers le serveur central 12, à l'aide des moyens d'émission-réception 22, 58 et par l'intermédiaire du réseau 20. Les données sont intégrées à la base de données centrale 16 du serveur 12 par exemple à l'aide d'un logiciel de synchronisation, stocké au moins dans les moyens de stockage 14 du serveur 12 et permettant de remplacer la partie des données extraites de la base de données 16 par les données de la base 52, plus récentes.

Il est à noter que ce procédé de recueil de données n'est pas limité au mode de réalisation décrit ci-dessus. Après que la base de données 52 a été téléchargée une fois sur l'outil 40, on peut tout à fait envisager qu'elle soit simplement synchronisée avec la base de données 16 pour mettre à jour la base de données 52 à partir de la base de données 16 lorsque l'outil est à nouveau utilisé. En outre, les données recueillies par l'outil 40 peuvent être transmises d'une autre manière au serveur 12 et les données de la base de données 16 peuvent être intégrées autrement à l'outil 40, par exemple par saisie manuelle. En outre, les étapes de lecture d'une puce ou de saisie sont optionnelles en fonction de l'outil utilisé. On peut se contenter de mettre en oeuvre l'une seule de ces deux étapes, par exemple l'étape de saisie lorsque l'outil 36 recueille les données, ou l'étape de lecture lorsque l'outil 38 collecte les données. Les données de la base 52 peuvent également être intégrées à la base de données centrale 16 à chaque fois que de nouvelles données sont entrées dans la base 52, c'est à dire en cours d'utilisation de l'outil par un opérateur, ou seulement après plusieurs utilisations de l'outil par un opérateur.

Des exemples de données qui peuvent être intégrées aux bases de données des différents outils sont explicitées ci-dessous.

L'outil 36 de surveillance du centre d'appel peut par exemple recueillir les données ci-après : le nombre de demandes reçues, le type de demandes reçues, le producteur qui a effectué une demande, le statut de la demande (en cours, clôturée, etc.), etc.

L'outil 38 de surveillance de la collecte de déchets peut par exemple recueillir les données ci-après : le nombre de conteneurs présentés à la collecte, le nombre de conteneurs collectés, le poids collecté, etc.

L'outil 40 d'aide à la maintenance ou de vérification du contenu d'un conteneur peut par exemple recueillir les données ci-après : l'état d'un conteneur (par exemple, roue ou couvercle endommagé), la date et la nature d'une opération de maintenance, l'état du tri d'un conteneur, etc.

La base de données 16 rassemble donc toutes ces données. Il est à noter qu'elle comprend également des données, dites statiques, concernant les conteneurs et les producteurs et qui ne sont pas généralement susceptibles d'être modifiées fréquemment. Ces données sont par exemple : un nom et une adresse d'un producteur, un identifiant d'un bac, le producteur auquel il est associé, le volume du bac, etc.

Une fois les données recueillies, celles-ci sont préparées, ou prétraitées, pour que la collectivité puisse s'en servir pour prendre des mesures concernant la gestion des déchets. On va maintenant décrire, en référence à la figure 3, un procédé 120 de traitement de données relatives à la gestion de la collectivité.

Ce procédé est mis en oeuvre lorsqu'un utilisateur 121, soit généralement un employé de la collectivité, souhaite accéder à des informations relatives à la collectivité. Dans ce cas, il se connecte par l'intermédiaire du terminal d'accès 24 au serveur 12. Cette connexion est effectuée par l'intermédiaire du réseau 20 et à l'aide d'un navigateur Internet. L'utilisateur peut avoir accès au serveur par des étapes classiques d'authentification à l'aide d'un couple identifiant-mot de passe.

Lorsque l'utilisateur s'est correctement authentifié, il accède à un espace personnel comprenant une page Internet d'interface lui permettant d'avoir accès à la base de données. L'espace personnel est géré par un programme d'ordinateur stocké dans les moyens de stockage du serveur. Ce programme met en oeuvre le procédé de traitement de données 120 et le serveur 12 forme alors support pour ce programme.

Le programme affiche alors sur le terminal 24, à l'aide de l'écran 32, des choix de paramètres, lors d'une étape 122. Ces paramètres sont par exemple proposés sous forme de menus déroulants. L'utilisateur peut choisir, lors d'une étape 124, de consulter certains paramètres proposés par le programme. Ces paramètres sont choisis à l'aide des moyens d'interface 30 du terminal 24, par exemple en cliquant sur un lien du menu déroulant.

De tels paramètres peuvent par exemple être un nombre de producteurs par ville, par circuit de collecte, par flux du conteneur qui leur est associé (verre, emballages, ordures ménagères, etc.), par activité, par taille du foyer ; un nombre de demandes par ville, par activité, par type ; un nombre de conteneurs présentés (ou un taux de présentation) par ville, par circuit de collecte, par activité du producteur, par volume ; un nombre de conteneurs collectés (ou un taux de collecte ou un poids collecté) par ville, par circuit de collecte, par activité du producteur, par flux, par volume ; un taux de participation par ville, par circuit de collecte, par activité du producteur, par volume ; un nombre d'interventions par ville, par circuit de collecte, par activité du producteur, par volume ; un état du contenu du conteneur par ville, par circuit de collecte, par activité du producteur, par flux, par volume ; etc.

Un taux de présentation est le nombre de conteneurs présentés à la collecte dans une zone prédéterminée que divise le nombre de bacs pouvant être présentés à la collecte dans la zone. Ce taux ne prend pas en compte des conteneurs présentés à la collecte de façon erronée (par exemple, si le paramètre est le taux de présentation par circuit de collecte, les conteneurs d'un circuit donné présentés sur un autre circuit de collecte ou les conteneurs d'un autre circuit de collecte présentés sur le circuit de collecte donné ne sont pas pris en compte pour l'un ou l'autre de ces circuits). Un taux de collecte est le nombre de conteneurs collectés dans une zone prédéterminée que divise le nombre de bacs pouvant être présentés à la collecte dans cette zone. De même, ce taux ne prend pas en compte les conteneurs collectés de façon erronée. Un taux de participation est le nombre de points de collecte (par exemple, un immeuble) ayant présenté au moins un conteneur dans une zone prédéterminée, que divise le nombre total de points de collecte de la zone. Ce taux ne prend pas non plus en compte les conteneurs attachés de façon erronée à un point de collecte.

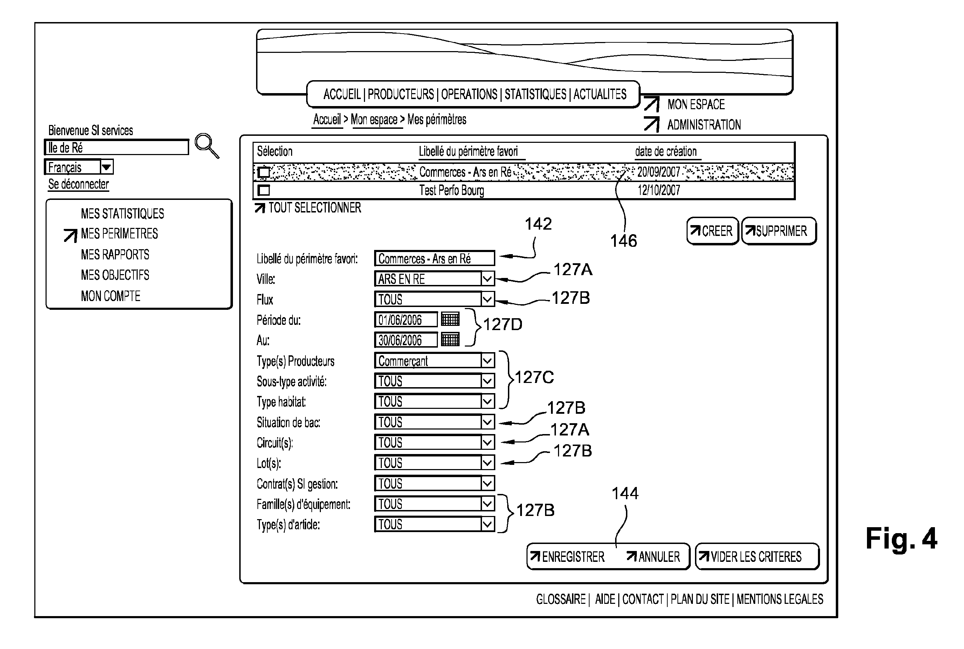

Ensuite, le terminal 24 propose à l'utilisateur, lors d'une étape 126, de sélectionner différents critères de traitement. Comme cela est représenté à la figure 4, ces critères de traitement sont présentés sous forme de menus déroulants. L'utilisateur sélectionne les critères de traitement à l'aide des moyens d'interface 30, lors d'une étape 128, en cliquant sur les liens des menus déroulants.

Les critères de restitution comprennent une zone géographique 127A (ville, circuit de collecte) pour laquelle on veut afficher le paramètre, un type de conteneurs 127B (flux, situation de bac, famille d'équipement, lot) et de producteurs 127C (type et sous-type d'activité) pour lequel on veut afficher le paramètre, et une période temporelle 127D. Ils peuvent également comprendre une unité de représentation (par exemple, concernant les conteneurs collectés, nombre de conteneurs ou volume de déchets), ou une échelle d'unité de représentation (par exemple, concernant la période temporelle, l'unité choisie peut être le jour, la semaine, le mois ou l'année), et un type de représentation (sous forme de graphique, de carte ou de tableau). Il est à noter que sur la figure 4, le paramètre pour lequel on choisit les critères de traitement est le taux de présentation par flux.

La demande de l'utilisateur est ensuite transmise au serveur 12 lors d'une étape 130 et, lors d'une étape 132, le serveur 12 sélectionne les données à traiter de façon à obtenir les paramètres demandés. Un paramètre est en général établi à partir de deux types de données (un type de donnée étant représentée en abscisse sur un graphique représentant le paramètre, l'autre type de donnée étant représentée en ordonnée), une ou deux des données pouvant avoir été obtenue à l'aide d'un outil de recueil des données.

Le programme stocké dans le serveur traite ensuite les données de façon à se plier aux critères de traitement demandés par l'utilisateur, lors d'une étape 134.

Ces deux étapes 132, 134 constituent une étape de détermination d'une valeur d'un paramètre relatif à la gestion des déchets dans la collectivité.

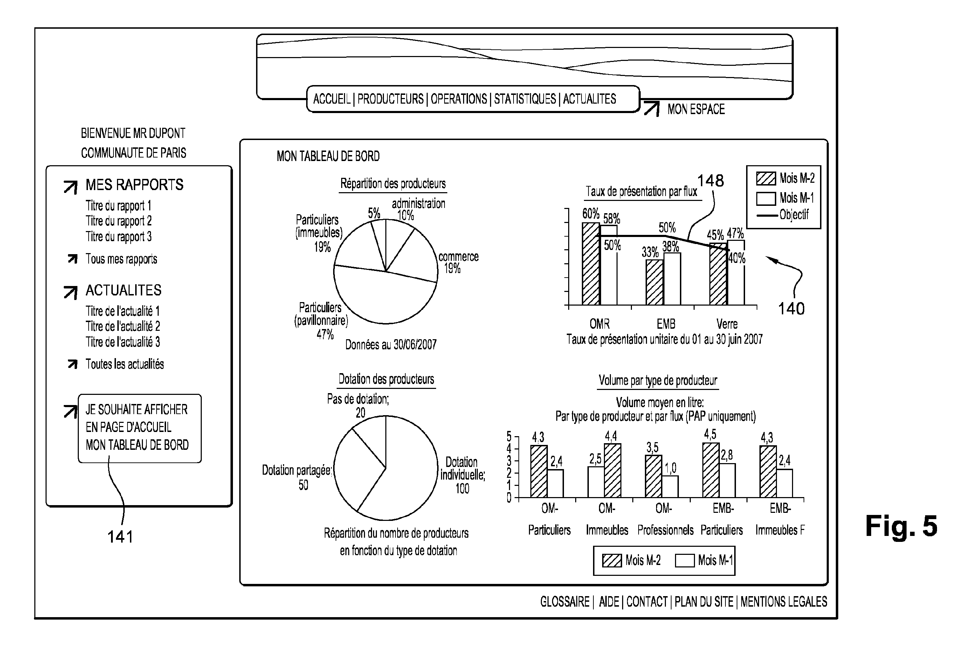

Le serveur 12 communique ensuite la réponse au terminal 24, lors d'une étape 136. Ce dernier affiche lors d'une étape 138 la réponse à la demande de l'utilisateur. On a illustré la présentation faite à l'utilisateur sur la figure 5. Le graphique 140, ici en barres, correspond à la communication du paramètre de la figure 4 avec les critères de traitement choisis sur cette figure.

Ce procédé permet à l'utilisateur d'avoir à sa disposition de nombreux indicateurs, par exemple des statistiques, qui lui permettent de mieux effectuer la gestion de la collectivité en matière de déchets. Ces indicateurs forment alors un « tableau de bord », permettant à l'utilisateur de contrôler facilement l'état de la gestion de la collectivité.

Par exemple, lorsque l'utilisateur sélectionne un paramètre lui fournissant le nombre de conteneurs présentés à la collecte par type de conteneur, associés à des critères de traitement sélectionnant comme période temporelle la dernière période de facturation et comme type de producteurs les particuliers, le procédé selon l'invention permet de déterminer le nombre de présentations de bacs effectués par des particuliers ayant un bac de volume donné lors de la dernière période de facturation. En multipliant cette donnée par le prix de la présentation (prix variant selon le type de producteur et le type de conteneur), l'utilisateur pourra calculer aisément et rapidement les recettes provisionnelles pour la période de facturation suivante. Le programme pourra également calculer directement ces recettes, lorsque l'utilisateur aura indiqué les différents prix de présentation.

Le procédé comprend également des étapes optionnelles qui simplifient encore la gestion de la collectivité pour l'utilisateur et sont décrites ci-après. Ces étapes sont indépendantes du procédé de recueil des données.

Lorsque l'utilisateur consulte préférentiellement des paramètres communiqués sous une certaine forme, il nomme, comme on le voit sur la figure 4, un ensemble d'un paramètre et des critères de traitement de celui-ci en utilisant un champ texte 142 et à l'aide des moyens 30. Ensuite, il enregistre cet ensemble, en cliquant sur l'icône 144. Une fois l'ensemble spécifique créé, l'utilisateur peut activer sa communication en cliquant sur un lien de l'interface utilisateur, par exemple un lien hypertexte tel que le champ 146. Si certains paramètres sont primordiaux pour l'utilisateur, il peut également les afficher en tant que page d'accueil de son espace personnel, en cliquant sur le lien 141, comme représenté à la figure 5, de l'interface utilisateur, à l'aide des moyens 30. Les paramètres sélectionnés seront alors automatiquement communiqués à l'utilisateur à chaque fois qu'il se connecte à son espace personnel.

En outre, l'utilisateur peut saisir une valeur d'objectif pour un paramètre, cette valeur d'objectif étant enregistrée dans les moyens de stockage du terminal ou du serveur et étant communiquée avec le paramètre, comme cela est visible sur la figure 5, où la courbe de valeurs d'objectif est référencée 148.

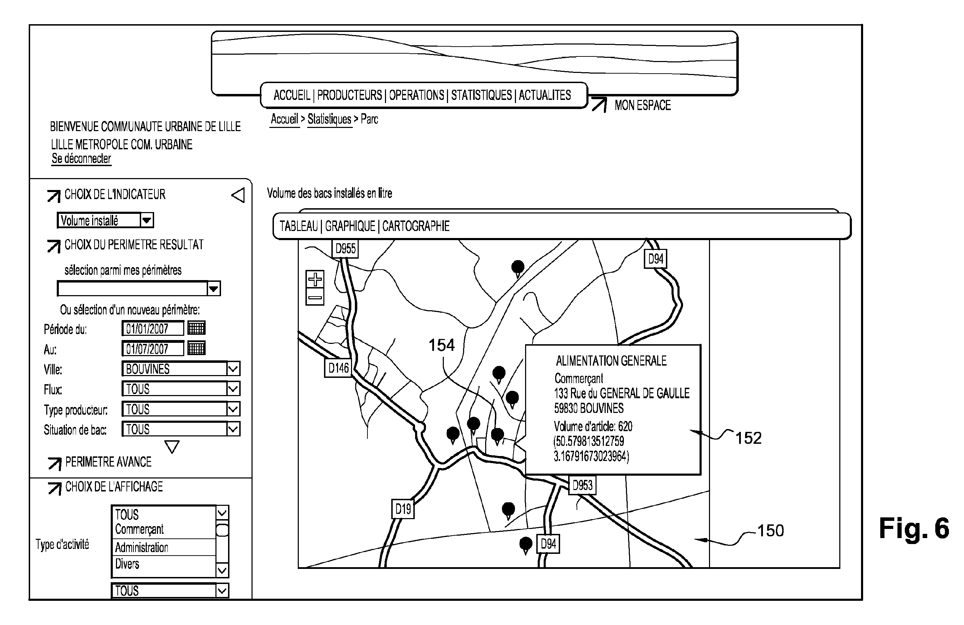

De plus, il est possible pour l'utilisateur de visualiser certaines données sur une carte, comme on le voit à la figure 6. En effet, le serveur stocke dans ses moyens de stockage 14 des cartes géographiques 150 relatives à des zones géographiques de la collectivité. Dans la base de données, chaque producteur est associé à des coordonnées sur la carte. De cette façon, lorsque l'utilisateur veut visualiser des données relatives à chaque producteur sur la carte, il en fait la requête au serveur à l'aide des moyens d'interface 30 du terminal. Un menu peut par exemple être prévu à cet effet. Le serveur associe alors la donnée 152 sur la carte 150 à la position du producteur 154 de telle sorte que la carte affiche la donnée à l'endroit représentant la position du producteur. La donnée affichée 152 peut être le nom du producteur, son adresse, le type du conteneur associé au producteur, son volume ou son identifiant.

Des données dynamiques peuvent également être représentées sur la carte géographique. Des coordonnées de localisation associées à un conteneur particulier peuvent par exemple être recueillies lors de la collecte, à l'aide d'un système de géolocalisation par satellite tel que GPS dont est muni l'outil de collecte correspondant. Ces coordonnées sont ensuite transmises au serveur 12 avec les autres données recueillies et stockées dans la base de données 16. Les conteneurs et les données qui leur sont associées peuvent être de ce fait représenté sur la carte. Une telle représentation pourrait par exemple être utile pour visualiser les conteneurs qui se trouvent hors de leur circuit habituel de collecte.

La représentation des données relatives à un producteur ou à un conteneur de collecte sur une carte géographique est effectuée à l'aide d'un webservice.

On notera que le procédé n'est pas limité à celui décrit dans le mode de réalisation ci-dessus. En effet, l'ordre des étapes et l'élément du système qui traite chaque étape n'est pas obligatoirement conforme à ce qui a été décrit. Les étapes 132 et 134 du procédé 120 peuvent par exemple être menées conjointement. En outre, de nombreuses étapes décrites ci-dessus sont optionnelles.

## Revendications

1. Procédé de gestion d'une collectivité de producteurs de déchets, **caractérisé en ce qu'**il comporte les étapes suivantes :
- on recueille (106, 108) des données relatives à la production de déchets dans la collectivité au moyen d'au moins un outil de recueil (36-40), l'outil ou l'un des outils (36) étant un outil de surveillance d'un centre d'appel répertoriant des demandes de producteurs de déchets,
- on stocke (110) les données dans une base de données (16),
- on détermine (132, 134) au moins une valeur d'au moins un paramètre relatif à la collectivité à partir des données recueillies et d'autres données stockées dans la base de données (16).

2. Procédé selon la revendication précédente, dans lequel les outils de recueil (36-40) sont au moins au nombre de deux, l'un d'eux au moins faisant partie de la liste d'outils suivante aptes à coopérer directement avec les conteneurs:
- un outil de saisie de données,
- un outil (38) de surveillance de collecte de conteneurs de déchets mis à disposition des producteurs,
- un outil de surveillance de collecte de déchets au niveau d'un point d'apport volontaire de déchets,
- un outil (40) de vérification du contenu des conteneurs, notamment d'une appartenance du contenu à au moins un type prédéterminé de déchets,
- un outil (40) d'aide à la maintenance des conteneurs.

3. Procédé selon la revendication précédente, dans lequel on centralise les données provenant des outils de recueil dans la base de données (16).

4. Procédé selon l'une quelconque des revendications précédentes, dans lequel les outils de recueil (36-40) sont au moins au nombre de deux et on détermine (132, 134) au moins une valeur d'au moins un paramètre à partir des données recueillies par l'un des outils et des données recueillies par un autre des outils.

5. Procédé selon l'une quelconque des revendications précédentes, dans lequel on sélectionne (126) des critères de traitement (127A-127D) du paramètre, et on communique (138), notamment sous forme de graphique et/ou de carte géographique et/ou de tableau, ce paramètre traité en fonction des critères sélectionnés.

6. Procédé selon la revendication précédente, dans lequel on enregistre les critères sélectionnés et de préférence on déclenche la communication du paramètre en fonction de critères enregistrés, le déclenchement ayant lieu par une activation d'un lien (146), notamment un lien hypertexte.

7. Procédé selon l'une quelconque des revendications 5 et 6, dans lequel on définit une valeur d'objectif (148) pour au moins un paramètre, et on communique la valeur d'objectif lors de la communication du paramètre.

8. Procédé selon l'une quelconque des revendications précédentes, dans lequel on associe au moins une donnée (152) relative à une entité de la collectivité à une position de l'entité (154) sur une carte géographique (150), et on représente la donnée sur la carte en liaison avec la position de l'entité.

9. Procédé de recueil de données relatives à une collectivité de producteurs de déchets, **caractérisé en ce que :**
- on recueille (106, 108) des données relatives à la production de déchets dans la collectivité par l'intermédiaire d'au moins un outil de recueil (36-40), l'outil ou l'un des outils (36) étant un outil de surveillance d'un centre d'appel répertoriant des demandes de producteurs de déchets,
- on stocke (110) Les données dans une base de données (16).

10. Procédé de traitement de données relatives à une collectivité de producteurs de déchets, **caractérisé en ce que**, des données relatives à la production de déchets dans la collectivité étant stockée dans une base de données (16), ces données comportant des données relatives à des demandes de producteurs de déchets recueillies auprès d'un centre d'appel, on détermine (132, 134) au moins une valeur d'au moins un paramètre relatif à la collectivité à partir des données recueillies et d'autres données stockées dans la base de données (16).

11. Système de gestion d'une collectivité de producteurs de déchets, **caractérisé en ce qu'**il comprend:
- au moins un outil de recueil (36-40) de données relatives à la production de déchets dans la collectivité, l'outil ou l'un des outils (36) étant un outil de surveillance d'un centre d'appel répertoriant des demandes de producteurs de déchets,
- des moyens de stockage (14) d'une base de données (16) comportant les données recueillies, et
- des moyens de détermination (18,14) d'au moins une valeur d'au moins un paramètre relatif à la collectivité à partir des données recueillies et d'autres données stockées dans la base de données (16).

12. Dispositif de traitement de données relatives à une collectivité de producteurs de déchets, **caractérisé en ce qu'**il comprend :
- des moyens de stockage (14) d'une base de données (16) comportant des données relatives à la production de déchets dans la collectivité, ces données comprenant des données relatives à des demandes de producteurs de déchets recueillies auprès d'un centre d'appel, et
- des moyens de détermination (18,14) d'au moins une valeur d'au moins un paramètre relatif à la collectivité à partir des données recueillies et d'autres données stockées dans la base de données (16).

13. Programme d'ordinateur, **caractérisé en ce qu'**il met en oeuvre l'un ou l'autre des procédés des revendications 1 à 10.

14. Support de données (12) **caractérisé en ce qu'**il comprend des moyens de stockage (14) d'un programme d'ordinateur selon la revendication précédente.

15. Mise à disposition d'un programme d'ordinateur selon la revendication 13.
